# EUROPEAN PATENT APPLICATION

(11) **EP 4 513 594 A1**
(43) Date of publication of application: **26.02.2025**
(21) Application number: 23791726.5
(22) Date of filing: 10.04.2023
(51) Int. Cl.: H01M 4/525, H01M 4/505

(54) **POSITIVE ELECTRODE ACTIVE MATERIAL FOR NON-AQUEOUS ELECTROLYTE SECONDARY BATTERIES, AND NON-AQUEOUS ELECTROLYTE SECONDARY BATTERY**

(30) Priority: 21.04.2022 JP 2022070317
(71) Applicant: Panasonic Intellectual Property Management Co., Ltd., Kadoma-shi, Osaka 571-0057 (JP)
(72) Inventor: FUKUTOME, Daiki, Kadoma-shi Osaka 571-0057 (JP); KAWADA, Hiroshi, Kadoma-shi Osaka 571-0057 (JP); HIBINO, Mitsuhiro, Kadoma-shi Osaka 571-0057 (JP); KUROSAWA, Takako, Kadoma-shi Osaka 571-0057 (JP); HAGAWA, Reiko, Kadoma-shi Osaka 571-0057 (JP); OKOSHI, Masaki, Kadoma-shi Osaka 571-0057 (JP)
(74) Representative: Novagraaf International SA
(86) International application number: PCT/JP2023/014515
(87) International publication number: WO 2023/204077

(57) **Abstract**

A positive electrode active material for non-aqueous electrolyte secondary batteries according to one example of an embodiment comprises a lithium-containing composite oxide that is secondary particles in which primary particles are aggregated. The lithium-containing composite oxide exhibits not fewer than 300 voids per 76.46 µm², an average void perimeter length of not more than 600 nm, and a porosity of not more than 0.15%, as determined by observation of a secondary particle cross-section.

## Description

### TECHNICAL FIELD

The present disclosure relates to a positive electrode active material for a non-aqueous electrolyte secondary battery, and a non-aqueous electrolyte secondary battery using the positive electrode active material.

### BACKGROUND ART

Non-aqueous electrolyte secondary batteries such as lithium-ion batteries are widely used for usage requiring a high capacity, such as on-board use and power storage use, in recent years. Since a positive electrode active material, which is a main constituent of a positive electrode, significantly affects performances of the battery such as the capacity, durability (capacity retention), and charge-discharge efficiency, there have been many investigations on the positive electrode active material. For example, Patent Literature 1 focuses on a number of pores included in secondary particles of a lithium-containing composite oxide for the purpose of improving the capacity retention of the battery, and discloses a lithium-containing composite oxide (positive electrode active material) having the number of pores controlled within a predetermined range. The positive electrode active material of Patent Literature 1 has a feature that the number of the pores per µm² on a cross section of the secondary particles is greater than or equal to 0.3 and less than or equal to 15.

### CITATION LIST

### PATENT LITERATURE

PATENT LITERATURE 1: Japanese Unexamined Patent Application Publication No. 2016-169817

### SUMMARY

The invention disclosed in Patent Literature 1 focuses on large pores having an area of greater than or equal to 0.01 µm², and claims that a high porosity of greater than or equal to 1% is preferable. As a result of investigation by the present inventors, it has been revealed that initial charge-discharge efficiency of the battery considerably deteriorates when the positive electrode active material having the large pores as disclosed in Patent Literature 1 is used. In the non-aqueous electrolyte secondary battery such as the lithium-ion battery, it is an important challenge to improve the charge-discharge efficiency.

A positive electrode active material for a non-aqueous electrolyte secondary battery according to the present disclosure is a positive electrode active material for a non-aqueous electrolyte secondary battery including a lithium-containing composite oxide being of secondary particles each formed by aggregation of primary particles, wherein in the lithium-containing composite oxide, a number of pores per 76.46 µm² determined by sectional observation of the secondary particles is greater than or equal to 300, an average value of circumferential lengths of the pores is less than or equal to 600 nm, and a porosity is less than or equal to 0.15%.

A non-aqueous electrolyte secondary battery according to the present disclosure comprises: a positive electrode including the above positive electrode active material; a negative electrode; and a non-aqueous electrolyte.

According to the positive electrode active material of the present disclosure, the initial charge-discharge efficiency of the non-aqueous electrolyte secondary battery may be improved.

### BRIEF DESCRIPTION OF DRAWINGS

FIG. 1 is a sectional view of a non-aqueous electrolyte secondary battery of an embodiment example.
FIG. 2 is an electron microscope image of a particle cross section of a positive electrode active material of an example of an embodiment.

### DESCRIPTION OF EMBODIMENTS

As noted above, it is an important challenge to improve the charge-discharge efficiency in the non-aqueous electrolyte secondary battery such as the lithium-ion battery. The present inventors have made intensive investigation with focusing on pores in the positive electrode active material, and ascertained that the initial charge-discharge efficiency of the battery is specifically improved when a number of pores included in secondary particles of a lithium-containing composite oxide being the positive electrode active material is greater than or equal to a predetermined number, and a circumferential length of the pores and a porosity are less than or equal to predetermined values.

Further, as a result of investigation by the present inventors, it has been revealed that the effect of improving the initial charge-discharge efficiency becomes more remarkable when the area of the primary particles and the circumferential length of the primary particles on the cross section of the secondary particles are less than or equal to predetermined values. The effect of improving the initial charge-discharge efficiency increases also when the lithium-containing composite oxide contains a specific element.

Hereinafter, an example of embodiments of the positive electrode active material for a non-aqueous electrolyte secondary battery and the non-aqueous electrolyte secondary battery using the positive electrode active material according to the present disclosure will be described in detail with reference to the drawings. The scope of the present disclosure includes selective combinations of constitutional elements of a plurality of embodiments and modified examples described below.

Hereinafter, a cylindrical battery in which a wound electrode assembly 14 is housed in a bottomed cylindrical exterior housing can 16 will be exemplified, but the exterior is not limited to a cylindrical exterior housing can, and may be, for example, a rectangular exterior housing can (rectangular battery), or a coin-shaped exterior housing can (coin battery). The exterior may also be an exterior constituted of laminated sheets including a metal layer and a resin layer (laminate battery). The electrode assembly is not limited to a wound electrode assembly, and may be a stacked electrode assembly in which a plurality of positive electrodes and a plurality of negative electrodes are alternately stacked via a separator.

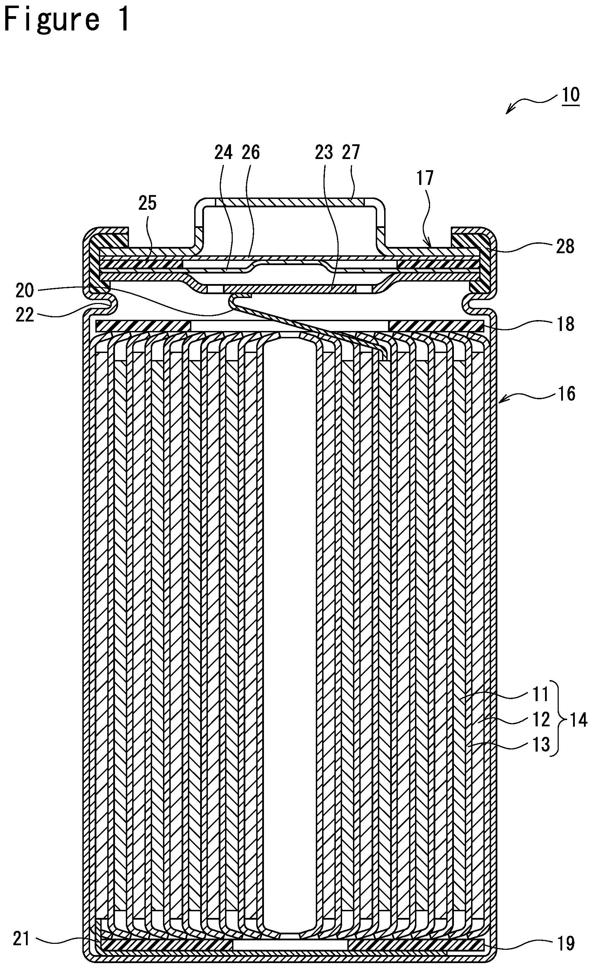

FIG. 1 is a sectional view of a non-aqueous electrolyte secondary battery 10 of an embodiment example. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening on one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, and a mixed solvent of two or more thereof, and the like are used, for example. The non-aqueous solvent may contain a halogen-substituted derivative in which hydrogen of these solvents is at least partially substituted with a halogen atom such as fluorine. An example of the non-aqueous solvent is ethylene carbonate (EC), ethyl methyl carbonate (EMC), dimethyl carbonate (DMC), a mixed solvent thereof, or the like. For the electrolyte salt, a lithium salt such as LiPF₆ is used, for example. The non-aqueous electrolyte is not limited to a liquid electrolyte, and may be a solid electrolyte.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17, and thereby sealing inside the battery is ensured. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, which constitute the electrode assembly 14, specifically a positive electrode active material constituting the positive electrode 11, will be described in detail.

### [Positive Electrode]

The positive electrode 11 has a positive electrode core and a positive electrode mixture layer formed on the positive electrode core. For the positive electrode core, a foil of a metal stable within a potential range of the positive electrode 11, such as aluminum and an aluminum alloy, a film in which such a metal is disposed on a surface layer thereof, and the like may be used. The positive electrode mixture layer includes a positive electrode active material, a binder, and a conductive agent, and is preferably provided on both surfaces of the positive electrode core. The positive electrode active material is lithium-containing composite oxide particles. The positive electrode 11 may be produced by, for example, applying a slurry of a positive electrode mixture on the positive electrode core, and drying and subsequently compressing the coating to form the positive electrode mixture layer on both the surfaces of the positive electrode core.

Examples of the binder included in the positive electrode mixture layer include a fluororesin such as polytetrafluoroethylene (PTFE) and polyvinylidene fluoride (PVdF), polyacrylonitrile (PAN), a polyimide, an acrylic resin, and a polyolefin. With any one of these resins, a cellulose derivative such as carboxymethylcellulose (CMC) or a salt thereof, polyethylene oxide (PEO), or the like may be used in combination. A content of the binder is, for example, greater than or equal to 0.5 mass% and less than or equal to 5 mass% relative to the mass of the positive electrode mixture layer.

As the conductive agent included in the positive electrode mixture layer 31, carbon materials such as carbon black such as acetylene black and Ketjenblack, graphite, and carbon nanotube are preferable. A content of the conductive agent is, for example, greater than or equal to 0.1 mass% and less than or equal to 10 mass% relative to a mass of the positive electrode mixture layer.

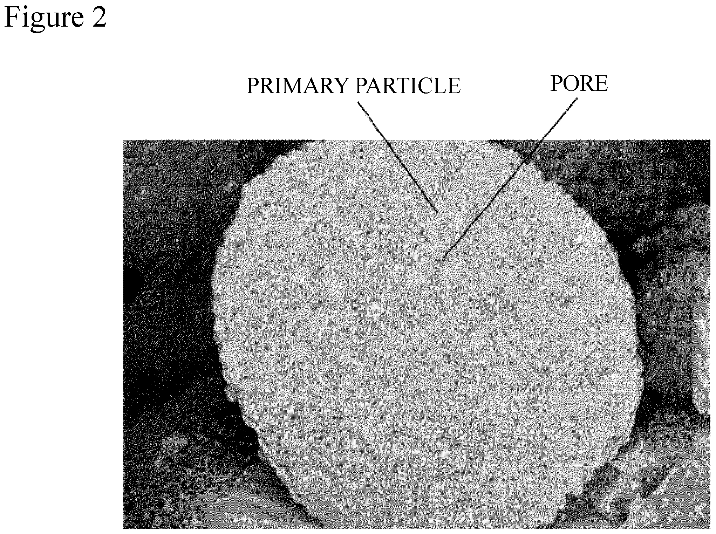

FIG. 2 is a scanning electron microscope (SEM) image of a particle cross section of the lithium-containing composite oxide (positive electrode active material) of an example of an embodiment. The lithium-containing composite oxide according to the present disclosure is of secondary particles each formed by aggregation of primary particles, and includes a plurality of pores. A number of the pores per 76.46 µm² determined by sectional observation of the secondary particles is greater than or equal to 300, an average value of circumferential lengths of the pores is less than or equal to 600 nm, and a porosity is less than or equal to 0.15%.

The positive electrode mixture layer may include a lithium-containing composite oxide other than the lithium-containing composite oxide according to the present disclosure, as the positive electrode active material. A higher proportion of the lithium-containing composite oxide according to the present disclosure in the positive electrode active material provides a higher effect of improving the charge-discharge efficiency of the battery. A content of the lithium-containing composite oxide according to the present disclosure is preferably greater than or equal to 50 mass%, more preferably greater than or equal to 80 mass%, and may be substantially 100 mass% relative to a total mass of the positive electrode active material. Hereinafter, the lithium-containing composite oxide means the lithium-containing composite oxide according to the present disclosure that satisfies the above physical properties unless otherwise mentioned.

A median diameter (D50) of the lithium-containing composite oxide on a volumetric basis is, for example, greater than or equal to 3 µm and less than or equal to 30 µm, and preferably greater than or equal to 5 µm and less than or equal to 25 µm. Since the lithium-containing composite oxide is of the secondary particles each formed by aggregation of the primary particles, the D50 of the composite oxide means D50 of the secondary particles. The D50 means a particle diameter at which a cumulative frequency is 50% from a smaller particle diameter side in a particle size distribution on a volumetric basis. The particle size distribution of the composite oxide may be measured by using a laser diffraction particle size distribution measuring device (for example, MT3000II, manufactured by MicrotracBEL Corp.) with water as a dispersion medium. The lithium-containing composite oxide has, for example, a layered crystal structure. Specific examples include a layered structure belonging to a space group R-3m or a layered structure belonging to a space group C2/m.

The lithium-containing composite oxide contains at least one metal element selected from the group consisting of Ni, Co, Mn, and Al. In this case, the battery having not only the excellent initial charge-discharge efficiency but also high capacity and excellent cycle characteristics is easily achieved. Alternatively, the lithium-containing composite oxide contains at least one metal element selected from the group consisting of Ni, Co, Mn, and Al, and an element M; or contains Ni, Mn, and an element M. Selecting and adding the appropriate element M allows the effect of improving the charge-discharge efficiency to become more remarkable.

Examples of the element M include Na, K, Mg, Ca, Sr, Ba, Sc, Y, La, Ce, Pr, Nd, Sm, Eu, Gd, Tb, Dy, Ho, Er, Tm, Yb, Lu, Ge, Sn, Pb, Sc, Ti, Si, V, Cr, Fe, Cu, Zn, Ru, Rh, Re, Pd, Ir, Ag, Sb, B, Ga, In, P, Zr, Hf, Nb, Ta, Mo, and W. Among them, metal elements such as W, V, Mo, Nb, and Ta are preferable, and for example, a plurality of metals such as W and V are more preferably added. A content of the element M is preferably greater than or equal to 0 mol% and less than or equal to 5 mol% relative to a total molar amount of the elements constituting the lithium-containing composite oxide excluding Li and O.

A ratio of Li to the metal element Me (Li/Me) in the lithium-containing composite oxide is, for example, greater than or equal to 0.95 and less than or equal to 1.15, and preferably greater than or equal to 1.05 and less than or equal to 1.15. It is considered that the ratio (Li/Me) within the above range may inhibit cation mixing, which is displacement of Li/Me in the crystal structure, compared with a case where the ratio is out of the above range, and this contributes to the improvement of the charge-discharge capacity. On the other hand, it is considered that an excessively large ratio (Li/Me) increases an impurity included in the lithium-containing composite oxide, such as excess Li, to inhibit the charge-discharge reactions. In addition, Co is expensive, and thereby a content of Co is preferably reduced considering the manufacturing cost.

The lithium-containing composite oxide contains 80 mol% of Ni relative to a total number of moles of elements excluding Li and O, for example. The content of Ni being greater than or equal to 50 mol% may yield a battery with a high energy density. An upper limit of the Ni content is preferably 95 mol%. If the content of Ni is greater than 95 mol%, it is difficult to achieve stability of the layered structure of the lithium-containing composite oxide, and the charge-discharge efficiency may deteriorate. An example of a preferable range of the Ni content is greater than or equal to 60 mol% and less than or equal to 90 mol%.

When the lithium-containing composite oxide contains Al, a content of Al relative to a total number of moles of elements excluding Li and O is preferably greater than or equal to 1 mol% and less than or equal to 10 mol%, and more preferably greater than or equal to 1 mol% and less than or equal to 7 mol%. Since an oxidation number of Al does not change during charge and discharge, containing Al in the transition metal layer is considered to stabilize the structure of the transition metal layer, and contributes to improvement of the charge-discharge efficiency and the cycle characteristics. On the other hand, an excessively large content of Al leads to capacity deterioration.

A preferable specific example of the lithium-containing composite oxide is a composite oxide represented by the general formula LiₐNi_{b}Mn_{c}Co_{d}AlₑM_{f}O₂, wherein 1.05≤a≤1.15, 0.05≤b≤0.95, 0≤c≤0.50, 0≤d≤0.1, 0≤e≤0.1, 0≤f≤0.05, b+c+d+e+f=1, and M represents at least one selected from the above elements Ms.

As noted above, the lithium-containing composite oxide is of the secondary particles each formed by aggregation of many primary particles. The secondary particles include many small pores. The presence of pores, the number and size of the pores, and the like are observed from the sectional SEM image of the secondary particles, and many or all of the pores are formed in space between the primary particles.

In the lithium-containing composite oxide, a number of the pores per 76.46 µm² of the cross section of the secondary particles is greater than or equal to 300. The presence and the number of the pores are determined by analyzing the SEM image of the cross section of the secondary particles. To expose the cross section of the secondary particles, a focusing ion beam (FIB) processer is used to obtain a cross section of a center portion (diameter) of the positive electrode active material. Then, the particle cross section (cross section of the secondary particles) of the lithium-containing composite oxide in the positive electrode mixture layer is observed with the SEM. In the present specification, an observation magnification of SEM in observing the particle cross section of the lithium-containing composite oxide is set to 20000.

Regions of the primary particles and the pores are extracted by appropriately selecting an image analysis software such as Image J and Avizo-Materials Science. The primary particles and the pores are extracted by subjecting the photographed image to noise removal such as a non-local means filter and BM3D, detecting an edge, and overlapping and applying a threshold of brightness with a Marker Based-Watershed method. A region detected as a center of a high-brightness region by the Watershed method is defined as the primary particle region, and a low-brightness region is defined as the pores.

In the lithium-containing composite oxide, a number of the pores per 76.46 µm² on the cross section of the secondary particles is greater than or equal to 300, an average value of circumferential lengths of the pores is less than or equal to 600 nm, and a porosity is less than or equal to 0.15%. As a result of investigation by the present inventors, it has been found that the charge-discharge efficiency of the battery is effectively improved only when all of the number of the pores, the circumferential length of the pores, and the porosity satisfy the above requirements. For example, a case where the number of the pores is less than 300 and the average value of the circumferential lengths of the pores is greater than 600 nm cannot achieve the good charge-discharge efficiency even with the porosity of less than or equal to 0.15%.

The average value of the circumferential lengths of the pores is calculated by measuring lengths of circumferences of all pores extracted by analyzing the sectional SEM image of the secondary particles, and averaging the measurement values. The porosity is a proportion of an area of the pores in the cross section of the secondary particles, and calculated with the formula: (Area of pores / Sectional area of secondary particles) × 100. The porosity may be calculated from a total area of the pores included per 76.46 µm² of the cross section of the secondary particles.

A number of the pores per 76.46 µm² of the cross section of the secondary particles is more preferably greater than or equal to 400, and particularly preferably greater than or equal to 500. An upper limit of the number of the pores is not particularly limited, and an example thereof is 1000, and preferably 800. An excessively large number of the pores causes difficulty in regulation of the porosity to less than or equal to 0.15%, for example.

The average value of the circumferential lengths of the pores is more preferably less than or equal to 500 nm, particularly preferably less than or equal to 400 nm, and most preferably less than or equal to 200 nm. A lower limit of the average value of the circumferential lengths is not particularly limited, and an example thereof is 50 nm. The porosity is more preferably less than or equal to 0.10%, and particularly preferably less than or equal to 0.05%. A lower limit of the porosity is not particularly limited, and an example thereof is 0.01%.

In the lithium-containing composite oxide, a median of areas of the primary particles determined by the sectional observation of the secondary particles is preferably less than or equal to 300000 nm². In this case, the effect of improving the charge-discharge efficiency becomes more remarkable compared with a case where the median is greater than 300000 nm². The median of the areas of the primary particles is determined by measuring areas of all primary particles extracted by analyzing the sectional SEM image of the secondary particles. The median of the areas of the primary particles is more preferably less than or equal to 100000 nm², and particularly preferably less than or equal to 80000 nm². A lower limit of the median is not particularly limited, and an example thereof is 30000 nm².

In the lithium-containing composite oxide, a median of circumferential lengths of the primary particles determined by the sectional observation of the secondary particles is preferably less than or equal to 2500 nm. In this case, the effect of improving the charge-discharge efficiency becomes more remarkable compared with a case where the median is greater than 2500 nm². The median of the circumferential lengths of the primary particles is determined by measuring circumferential lengths of all primary particles extracted by analyzing the sectional SEM image of the secondary particles. The median of the circumferential lengths of the primary particles is more preferably less than or equal to 1500 nm, and particularly preferably less than or equal to 1300 nm. A lower limit of the median is not particularly limited, and an example thereof is 800 nm.

Hereinafter, an example of a method for manufacturing the lithium-containing composite oxide according to the present disclosure will be described.

The manufacturing steps of the lithium-containing composite oxide include, for example: a first step of obtaining a composite hydroxide or a composite oxide containing at least one metal element selected from the group consisting of Ni, Co, Mn, and Al; a second step of mixing and firing the composite hydroxide or the composite oxide and a lithium compound; and a third step of washing the fired product with water and drying the product. In the first step, preliminary firing may be performed at a lower temperature than for the main firing in the second step. As a result of investigation by the present inventors, it has been found that conditions such as, for example, the temperature of the preliminary firing and the water washing affect the pores and the size of the primary particles of the lithium-containing composite oxide.

In the first step, for example, with stirring a solution of metal salts containing at least one metal element selected from the group consisting of Ni, Co, Mn, and Al, and as necessary the above element M, a solution of an alkali such as sodium hydroxide is added dropwise in order to adjust a pH on the alkaline side (for example, greater than or equal to 8.5 and less than or equal to 12.5) to precipitate (coprecipitate) the composite hydroxide. This composite hydroxide is preliminarily fired in the atmosphere or under oxygen flow to obtain the composite oxide. The preliminarily firing temperature is preferably less than or equal to 600°C, and may be greater than or equal to 300°C and less than or equal to 500°C.

The preliminary firing may be a multi-stage firing step including, for example, at least: a first firing step of firing in the atmosphere at greater than or equal to 100°C and less than or equal to 300°C; and a second firing step of firing the fired product obtained in the first firing step in the atmosphere at greater than or equal to 300°C and less than or equal to 600°C. In the first firing step, the temperature is raised to a first set temperature of less than or equal to 300°C at a first temperature-raising rate of greater than or equal to 0.2 °C/min and less than or equal to 5.5 °C/min. In the second firing temperature, the temperature is raised to a second set temperature of less than or equal to 600°C at a second temperature-raising rate of greater than or equal to 0.1 °C/min and less than or equal to 3.5 °C/min and lower than the first temperature-raising rate. A plurality of the first and second temperature-raising rate may be set within the above range in each predetermined temperature region.

A holding time at the first set temperature in the first firing step is preferably less than or equal to 5 hours, and more preferably less than or equal to 3 hours. The holding time at the first set temperature refers to a time of keeping the first set temperature after the temperature reaches the first set temperature (the same applies to the second firing step), and the holding time may be zero. A holding time at the second set temperature in the second firing step is preferably greater than or equal to 1 hour and less than or equal to 10 hours, and more preferably greater than or equal to 1 hour and less than or equal to 5 hours. Although varying depending on the main firing temperature and the like, a lower preliminarily firing temperature tends to yield a smaller circumferential length of the pores.

In the second step, for example, the composite hydroxide or the composite oxide obtained in the first step and the lithium compound are mixed. An example of the lithium compound includes Li₂CO₃, LiOH, Li₂O₂, Li₂O, LiNO₃, LiNO₂, Li₂SO₄, LiOH·H₂O, LiH, and LiF. The composite hydroxide or the composite oxide and the lithium compound are preferably mixed at a mole ratio between the metal element Me and Li of, for example, greater than or equal to 1:1.05 and less than or equal to 1:1.15.

The step of firing the mixture in the third step is a multi-stage firing step at least including, for example: a first firing step of firing the mixture under an oxygen flow at greater than or equal to 500°C and less than or equal to 700°C; and a second firing step of firing the fired product obtained in the first firing step under an oxygen flow at a temperature of greater than 700°C. In the first firing step, the temperature is raised at a first temperature-raising rate, which is greater than or equal to 0.2°C/min and less than or equal to 5.5°C/min, to a first set temperature of less than or equal to 700°C. In the second firing step, the temperature is raised at a second temperature-raising rate, which is greater than or equal to 0.1°C/min and less than or equal to 3.5°C/min and which is smaller than the first temperature-raising rate, to a second set temperature of less than or equal to 900°C. Each of the first and second temperature-raising rates may be set by more than one within the above ranges per a predetermined temperature region.

A holding time at the first set temperature in the first firing step is preferably less than or equal to 5 hours, and more preferably less than or equal to 3 hours. The holding time at the first set temperature refers to a time of keeping the first set temperature after the temperature reaches the first set temperature (the same applies to the second firing step), and the holding time may be zero. A holding time at the second set temperature in the second firing step is preferably greater than or equal to 1 hour and less than or equal to 10 hours, and more preferably greater than or equal to 1 hour and less than or equal to 5 hours. The firing of the mixture is performed in an oxygen flow with an oxygen concentration of, for example, greater than or equal to 60%, and performed with a flow rate of the oxygen flow of greater than or equal to 0.2 mL/min and less than or equal to 4 mL/min per 10 cm³ of the firing furnace, and greater than or equal to 0.3 L/min per kilogram of the mixture.

In the fourth step, the fired product obtained in the third step is washed with water to remove an impurity such as excess Li, and the fired product washed with water is dried. As necessary, the fired product may be crushed, classified, and treated otherwise to regulate D50 of the positive electrode active material within a target range. The fired product washed with water may be dried in vacuo, or may be dried in the atmosphere. An example of the drying temperature is greater than or equal to 150°C and less than or equal to 250°C, and an example of the drying treatment time is greater than or equal to 1 hour and less than or equal to 5 hours. The water washing may be a method of feeding the active material into water and stirring the mixture, or may be a method of passing the active material through water to be wet. An electric conductance of water used for the water washing is preferably less than or equal to 1×10⁻⁴ S/m at 25°C. A degree of the water washing may be regulated by a solid-liquid ratio between the fired product and water, the water washing time, the stirring speed, and the like. For example, the solid-liquid ratio between the fired product and water is preferably greater than or equal to 1:0.1 and less than or equal to 1:10, and more preferably greater than or equal to 1:0.5 and less than or equal to 1:5. Although varying depending on the main firing temperature, the water washing condition, and the like, performing the water washing tends to reduce the circumferential length of the primary particles of the lithium-containing composite oxide.

In the manufacturing steps of the lithium-containing composite oxide, the addition of the element M, the preliminarily firing condition, the main firing condition, the water washing condition, and the like are appropriately modified so that the number of the pores of the composite oxide, the average value of the circumferential lengths of the pores, the porosity, the median of the areas of the primary particles, and the median of the circumferential lengths of the primary particles satisfy the above conditions.

### [Negative Electrode]

The negative electrode 12 has a negative electrode core and a negative electrode mixture layer formed on the negative electrode core. For the negative electrode core, a foil of a metal stable within a potential range of the negative electrode 12, such as copper or a copper alloy, a film in which such a metal is disposed on a surface layer thereof, or the like may be used. The negative electrode mixture layer includes a negative electrode active material, a binder, and as necessary a conductive agent such as carbon nanotube, and is preferably provided on both surfaces of the negative electrode core. The negative electrode 12 may be produced by, for example, applying a negative electrode mixture slurry including the negative electrode active material, the binder, and the like on the surfaces of the negative electrode core, and drying and subsequently compressing the coating to form the negative electrode mixture layers on both surfaces of the negative electrode core.

The negative electrode mixture layer includes, generally, a carbon material that reversibly absorbs and desorbs lithium ions as the negative electrode active material. A preferable example of the carbon material is a graphite such as: a natural graphite such as flake graphite, massive graphite, or amorphous graphite; and an artificial graphite such as massive artificial graphite (MAG) or graphitized mesophase-carbon microbead (MCMB). As the negative electrode active material, an active material including at least one of an element that forms an alloy with Li, such as Si and Sn, and a material containing such an element may be used. A preferable example of the active material is a Si-containing material in which Si fine particles are dispersed in a SiO₂ phase or a silicate phase such as lithium silicate. As the negative electrode active material, graphite and the Si-containing material may be used in combination.

For the binder included in the negative electrode mixture layer, a fluororesin, PAN, a polyimide, an acrylic resin, a polyolefin, or the like may be used as in the case of the positive electrode 11, but styrene-butadiene rubber (SBR) is preferably used. The negative electrode mixture layer preferably further includes CMC or a salt thereof, polyacrylic acid (PAA) or a salt thereof, polyvinyl alcohol (PVA), or the like. Among them, SBR; and CMC or a salt thereof, or PAA or a salt thereof are preferably used in combination.

### [Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. On a surface of the separator 13, a highly heat-resistant resin layer such as an aramid resin, may be formed.

On a boundary between the separator 13 and at least one of the positive electrode 11 and the negative electrode 12, a filler layer including an inorganic filler may be formed. Examples of the inorganic filler include oxides containing a metal element such as Ti, Al, Si, and Mg, and a phosphoric acid compound. The filler layer may be formed by applying a slurry containing the filler on the surface of the positive electrode 11, the negative electrode 12, or the separator 13.

### EXAMPLES

Hereinafter, the present disclosure will be further described with Examples, but the present disclosure is not limited to these Examples.

### <Example 1>

### [Synthesis of Positive Electrode Active Material]

A composite hydroxide obtained by a coprecipitation method and represented by [Ni_{0.8}Mn_{0.2}](OH)₂ and lithium hydroxide were mixed so that a mole ratio between a metal element Me and Li was 1:1.11. This mixture was fired under an oxygen flow with an oxygen concentration of 95% (a flow rate of 2.5 mL/min per 10 cm³ and 5 L/min per kilogram of the mixture) by raising the temperature at a temperature-raising rate of 2.0 °C/min from a room temperature to 650°C, and then fired by raising the temperature at a temperature-raising rate of 1.0 °C/min to 800°C. This fired product was fed into water having an electric conductance of less than or equal to 1×10⁻⁵ S/m under a condition of a solid-liquid ratio between the fired product and water of 1:0.8, the fired product was washed with water for 5 minutes while stirring at 400 rpm, and then dried in vacuo at 180°C for 2 hours to obtain a positive electrode active material (lithium-containing composite oxide).

A particle cross section of the positive electrode active material was exposed by using CP, and the particle cross section was observed by using an SEM (magnification: 20000). As a result, it was confirmed that the positive electrode active material was of secondary particles each formed by aggregation of many primary particles, and the secondary particles include many pores. By the above image analysis method from the SEM image of the particle cross section, a median of areas of the primary particles (Sm), a median of circumferential lengths of the primary particles (Lp), an average value of circumferential lengths of the pores (Lv), a number of the pores per 76.46 µm², and a porosity were determined. Table 1 shows the measurement values (the same applies to the following Examples and Comparative Example).

### [Production of Positive Electrode]

The positive electrode active material, acetylene black, and polyvinylidene fluoride were mixed at a solid-content mass ratio of 92:5:3, and N-methyl-2-pyrrolidone (NMP) was used as a dispersion medium to prepare a positive electrode mixture slurry. Then, the positive electrode mixture slurry was applied on a positive electrode core made of aluminum foil, the coating was dried and compressed, and then the positive electrode core was cut to a predetermined electrode size to obtain a positive electrode in which positive electrode mixture layers were formed on both surfaces of the positive electrode core.

### [Production of Negative Electrode]

As a negative electrode active material, graphite was used. The negative electrode active material, a sodium salt of CMC, and a dispersion of SBR were mixed at a solid-content mass ratio of 98:1:1, and water was used as a dispersion medium to prepare a negative electrode mixture slurry. Then, the negative electrode mixture slurry was applied on a negative electrode core made of copper foil, the coating was dried and rolled, and then the negative electrode core was cut to a predetermined electrode size to obtain a negative electrode in which negative electrode mixture layers were formed on both surfaces of the negative electrode core.

### [Preparation of Non-Aqueous Electrolyte Liquid]

Ethylene carbonate (EC), dimethyl carbonate (DMC), and ethyl methyl carbonate (EMC) were mixed at a volume ratio of 20:75:5. Into this mixed solvent, LiPF₆ was dissolved so that the concentration was 1.3 mol/L to prepare a non-aqueous electrolyte.

### [Production of Test Cell]

The positive electrode and the negative electrode to which leads were attached were wound via a separator to produce a wound electrode assembly. The electrode assembly was inserted into an exterior made of an aluminum laminate film, dried in vacuo at 105°C for 2 hours, then the non-aqueous electrolyte liquid was injected, and an opening of the exterior was sealed to obtain a test cell (non-aqueous electrolyte secondary battery).

### <Example 2>

A test cell was produced in the same manner as in Example 1 except that, in the synthesis of the positive electrode active material, the temperature of the composite hydroxide was raised in the atmosphere at a temperature-raising rate of 5.0 °C/min from room temperature to 150°C for preliminary firing, and then the temperature was raised at a temperature-raising rate of 1.0 °C/min to 600°C for preliminary firing.

### <Example 3>

A test cell was produced in the same manner as in Example 1 except that, in the synthesis of the positive electrode active material, the composite hydroxide and lithium hydroxide were mixed so that the mole ratio between the metal element Me and Li was 1:1.09, and the mixture was subjected to a main firing in oxygen at 820°C.

### <Example 4>

A test cell was produced in the same manner as in Example 3 except that, in the synthesis of the positive electrode active material, the water washing and the drying after the water washing of the fired product were not performed.

### <Example 5>

A test cell was produced in the same manner as in Example 1 except that, in the synthesis of the positive electrode active material, a composite hydroxide obtained by a coprecipitation method and represented by [Ni_{0.8}Mn_{0.2}](OH)₂, lithium hydroxide, tungsten oxide (WO₃), and vanadium oxide (V₂O₄) were mixed so that a mole ratio between a total amount of Ni and Mn, Li, W, and V was 1:1.11:0.005:0.005, and the preliminary firing of the composite hydroxide, the water washing and the drying after the water washing of the fired product were not performed.

### <Example 6>

A test cell was produced in the same manner as in Example 3 except that, in the synthesis of the positive electrode active material, the temperature of the composite hydroxide was raised in the atmosphere at a temperature-raising rate of 5.0 °C/min from room temperature to 150°C for preliminary firing, and then the temperature was raised at a temperature-raising rate of 1.0 °C/min to 500°C for preliminary firing.

### <Example 7>

A test cell was produced in the same manner as in Example 1 except that, in the synthesis of the positive electrode active material, the composite hydroxide and lithium hydroxide were mixed so that a mole ratio between the metal element Me and Li was 1:1.05, and the temperature of the composite hydroxide was raised in the atmosphere at a temperature-raising rate of 5.0 °C/min from room temperature to 150°C for preliminarily firing, and then the temperature was raised at a temperature-raising rate of 1.0 °C/min to 600°C for preliminary firing.

### <Comparative Example 1>

A test cell was produced in the same manner as in Example 5 except that a composite hydroxide obtained by a coprecipitation method and represented by [Ni_{0.8}Mn_{0.2}](OH)₂, lithium hydroxide, and bismuth oxide (Bi₂O₃) were mixed so that a mole ratio between a total amount of Ni and Mn, Li, and Bi was 1:1.11:0.005.

Initial charge-discharge efficiency of each of the test cells of Examples and Comparative Example was evaluated by the following method. Table 1 show the evaluation results together with the physical properties and the manufacturing condition of the positive electrode active material.

### [Initial Charge-Discharge Efficiency]

A charge capacity and a discharge capacity of each of the evaluation-target test cells were determined with the following charge and discharge, and a proportion of the discharge capacity relative to the charge capacity was calculated as the initial charge-discharge efficiency.

### <Charge>

Under a temperature environment of 25°C, the evaluation-target battery was charged at a constant current of 0.2 C until a cell voltage reached 4.5 V, and then charged at a constant voltage of 4.5 V until a current reached 0.02 C.

### <Discharge>

After rest for 10 minutes, under a temperature environment of 25°C, the battery was discharged at a constant current of 0.2 C until the voltage reached 2.5 V.

**[Table 1]**

| | Positive electrode active material | | | | | | | | Cell evaluation |
|---|---|---|---|---|---|---|---|---|---|
| | Water washing | Preliminary firing | Element M | Sm | Lp | Lv | Number of pores | Porosity | Initial efficiency |
| Example 1 | performed | not performed | - | 56230 | 1100 | 167 | 633 | 0.04% | 88.1% |
| Example 2 | performed | 600°C | - | 73610 | 1310 | 190 | 523 | 0.04% | 86.4% |
| Example 3 | performed | not performed | - | 67760 | 1280 | 182 | 525 | 0.04% | 88.1% |
| Example 4 | not performed | not performed | - | 94400 | 1490 | 221 | 477 | 0.05% | 85.6% |
| Example 5 | not performed | not performed | W, V | 101000 | 1450 | 250 | 444 | 0.05% | 87.1% |
| Example 6 | performed | 500°C | - | 83020 | 1350 | 192 | 548 | 0.04% | 87.2% |
| Example 7 | performed | 600°C | - | 84570 | 1325 | 493 | 308 | 0.15% | 86.9% |
| Comparative Example 1 | not performed | not performed | Bi | 332640 | 2590 | 790 | 103 | 0.10% | 82.6% |

As shown in Table 1, all of the test cells of Examples have excellent initial charge-discharge efficiency compared with the test cell of Comparative Example. Specifically, cases where the number of the pores was greater than or equal to 400, the average value of the circumferential lengths of the pores (Lv) was less than or equal to 300 nm, and the porosity was less than or equal to 0.10% (Examples 1, 3, 5, and 6) exhibited a large effect of improving the charge-discharge efficiency. In cases where Lv was less than or equal to 200 nm, the porosity was less than or equal to 0.05%, the median of the areas of the primary particles (Sm) was less than or equal to 80000 nm² (less than or equal to 70000 nm²), and the median of the circumferential lengths of the primary particles (Lp) was less than or equal to 1300 nm (Examples 1 and 3), further improvement of the charge-discharge efficiency was observed.

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket

## Claims

1. A positive electrode active material for a non-aqueous electrolyte secondary battery including a lithium-containing composite oxide being of secondary particles each formed by aggregation of primary particles, wherein
in the lithium-containing composite oxide, a number of pores per 76.46 µm² determined by sectional observation of the secondary particles is greater than or equal to 300, an average value of circumferential lengths of the pores is less than or equal to 600 nm, and a porosity is less than or equal to 0.15%.

2. The positive electrode active material for a non-aqueous electrolyte secondary battery according to claim 1, wherein the lithium-containing composite oxide contains at least one metal element selected from the group consisting of Ni, Co, Mn, and Al, and at least one element selected from the group consisting of W, V, Mo, Nb, and Ta.

3. The positive electrode active material for a non-aqueous electrolyte secondary battery according to claim 1, wherein in the lithium-containing composite oxide, a median of areas of the primary particles determined by the sectional observation of the secondary particles is less than or equal to 300000 nm².

4. The positive electrode active material for a non-aqueous electrolyte secondary battery according to claim 1, wherein in the lithium-containing composite oxide, a median of circumferential lengths of the primary particles determined by the sectional observation of the secondary particles is less than or equal to 2500 nm.

5. A non-aqueous electrolyte secondary battery, comprising:
a positive electrode including the positive electrode active material according to any one of claims 1 to 4;
a negative electrode; and
a non-aqueous electrolyte.
